# EUROPEAN PATENT APPLICATION

(11) **EP 4 804 580 A1**
(43) Date of publication of application: **09.09.2026**
(21) Application number: 23957736.4
(22) Date of filing: 02.11.2023
(51) Int. Cl.: H04W 8/24, H04W 72/0457, H04W 72/21

(54) **TERMINAL AND WIRELESS COMMUNICATION METHOD**

(71) Applicant: NTT DOCOMO, INC., Tokyo 100-6150 (JP)
(72) Inventor: OKANO, Mayuko, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2023/039768
(87) International publication number: WO 2025/094411

(57) **Abstract**

This terminal comprises: a control unit that generates an uplink control signal including terminal capability information defining a terminal capability relating to partial scheduling in multi-cell scheduling; and a transmission unit that transmits the uplink control signal.

## Description

### Technical Field

The present disclosure relates to a terminal and a radio communication method.

### Background Art

The 3rd Generation Partnership Project (3GPP, a registered trademark) has standardized a 5th generation mobile communication system (also referred to as 5G, New Radio (NR), or Next Generation (NG)), and is further standardizing a next generation system called Beyond 5G, 5G Evolution, or 6G.

In 3GPP, some techniques have been specified in Release-17 (Rel-17) for coverage enhancement of uplink signals, such as PUSCH, PUCCH, and Msg3 PUSCH in a random access procedure (for example, see Non-Patent Literature (hereinafter referred to as NPL) 1 and 2). Note that the PUSCH is an abbreviation for a Physical Uplink Shared Channel. The PUCCH is an abbreviation for Physical Uplink Control Channel.

In 3GPP, a multi-carrier enhancement for downlink signals and uplink signals is being discussed (for example, see NPL 3). For example, multi-cell physical downlink shared channel (PDSCH) scheduling using single downlink control information (DCI) is being discussed.

In addition, in the RAN1 #114-bis meeting, it was agreed that partial scheduling is supported in multi-cell PDSCH scheduling. In the partial scheduling, there is a cell in which the PDSCH scheduling by DCI is not performed.

### Citation List

### Non-Patent Literature

NPL 1
   3GPP TS 38.214 V17.7.0 (2023-09)
NPL 2
   3GPP TS 38.300 V17.6.0 (2023-09)
NPL 3
   "New WID on Multi-carrier enhancements", RP-213577, 3GPP TSG RAN Meeting #94e, Electronic Meeting, Dec. 6 - 17, 2021

### Summary of Invention

At present, control of a terminal for the partial scheduling has not been sufficiently considered. In a case where a regulation on such control is not clearly defined, communication between a base station and a terminal may not be appropriately performed.

An aspect of the present disclosure is to provide a terminal and a radio communication method each capable of appropriately controlling support for partial scheduling in multi-cell PDSCH scheduling.

### Solution to Problem

A terminal according to an aspect of the present disclosure includes: a control section that generates an uplink control signal including a UE capability specifying a capability of the terminal related to partial scheduling in multi-cell scheduling; and a transmission section that transmits the uplink control signal.

### Brief Description of Drawings

FIG. 1 is a diagram illustrating an example of a radio communication system according to an embodiment;
FIG. 2 is a diagram illustrating a configuration example of a radio frame, a subframe, and slots used in the radio communication system;
FIG. 3 is a diagram illustrating multi-carrier scheduling;
FIG. 4 is a diagram illustrating self-carrier scheduling;
FIG. 5 is a diagram illustrating cross-carrier scheduling;
FIG. 6 is a diagram illustrating scheduling in DCI format 1_3;
FIG. 7 is a diagram illustrating reference cells;
FIG. 8 is a diagram illustrating an overview of Type-1 HARQ-ACK CB;
FIG. 9 is a diagram illustrating an overview of Type-2 HARQ-ACK CB;
FIG. 10 is a diagram illustrating an overview of Type-3 HARQ-ACK CB;
FIG. 11 is a diagram illustrating an example of a description of the current usage;
FIG. 12 is a diagram illustrating an example of a description of the current usage;
FIG. 13 is a flowchart describing an operation of a terminal in Option 1 of Proposal 1;
FIG. 14 is a diagram illustrating a part of a list of Prerequisite FGs related to multi-carrier scheduling (DCI format 1_3);
FIG. 15 is a diagram illustrating another part of a list of the Prerequisite FGs related to multi-carrier scheduling (DCI format 1_3);
FIG. 16 is a block diagram illustrating an example of a configuration of a base station according to the embodiment;
FIG. 17 is a block diagram illustrating an example of a configuration of the terminal according to the embodiment;
FIG. 18 is a diagram illustrating an example of a hardware configuration of the base station and the terminal according to the present embodiment; and
FIG. 19 is a diagram illustrating a configuration example of a vehicle.

### Description of Embodiments

Hereinafter, embodiments of the present disclosure will be described with reference to the accompanying drawings. Note that the embodiments described below are merely examples, and the embodiments to which the present disclosure is applied are not limited to the following embodiments.

In addition, in the following description, the notation "/" may mean "and/or" unless otherwise specified.

### <Radio System Configuration>

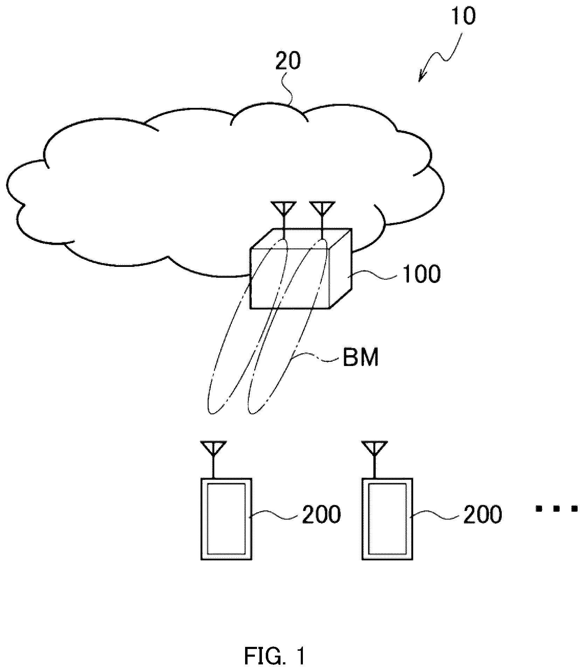

FIG. 1 is a diagram illustrating an example of radio communication system 10 according to an embodiment. Radio communication system 10 is a radio communication system according to New Radio (NR), and includes a Next Generation-Radio Access Network (hereinafter, NG-RAN 20 and terminal 200). Radio communication system 10 may be a radio communication system according to a system called 5G, Beyond 5G, 5G Evolution, or 6G. The terminal is also referred to as User Equipment (UE).

NG-RAN 20 includes base station 100. Base station 100 may be, for example, a gNB or an ng-eNB. NG-RAN 20 is connected to a core network (for example, 5GC, not illustrated) according to the NR. NG-RAN 20 and the 5GC may be simply referred to as a network.

Base station 100 is a radio base station according to the NR, and performs radio communication according to the NR with terminal 200. Base station 100 and terminal 200 controls radio signals transmitted from a plurality of antenna elements to handle Massive Multi Input Multi Output (MIMO) for generating a beam having a higher directivity, carrier aggregation (CA) using a plurality of component carriers (CCs) bundled together, dual connectivity (DC) for performing communication with a plurality of NG-RAN nodes and terminals simultaneously, and the like.

Radio communication system 10 supports FR1 and FR2. The frequency bands of respective frequency ranges (FRs) are as follows.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and SCS of 60 kHz or 120 kHz (240 kHz may be included) is used, and a bandwidth (BW) of 50 to 400 MHz may be used.

Note that the SCS may be interpreted as numerology. The numerology is defined in 3GPP TS38.300 and corresponds to one sub-carrier spacing in a frequency domain.

Further, radio communication system 10 may support a frequency band higher than the frequency band of the FR2. Specifically, radio communication system 10 may support a frequency band of above 52.6 GHz to 114.25 GHz. Such a high frequency band may be referred to as "FR2x" for convenience. In a case where a band above 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having a larger SCS may be applied.

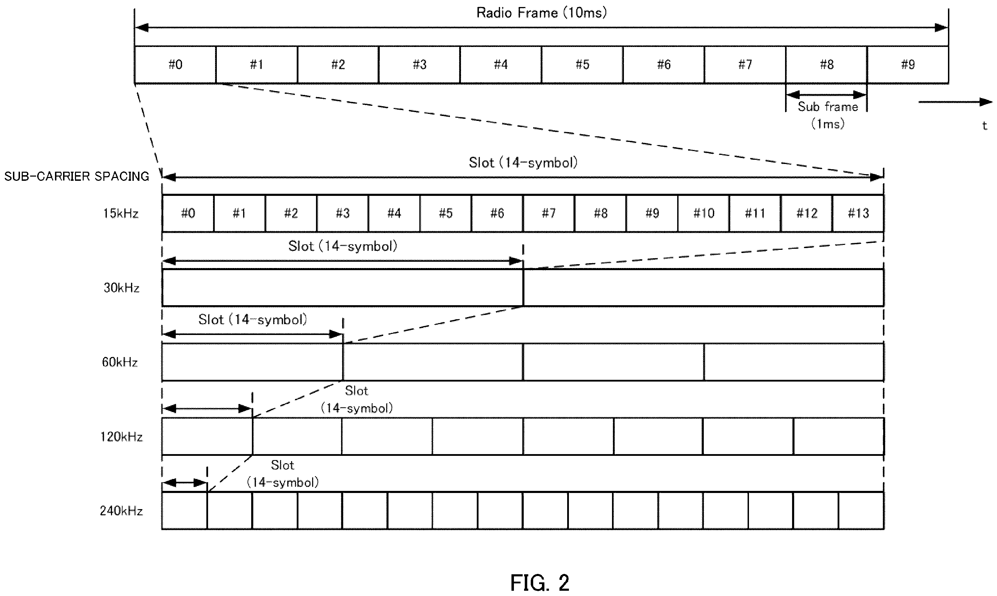

FIG. 2 illustrates a configuration example of a radio frame, a subframe, and slots used in radio communication system 10. As illustrated in FIG. 2, one slot is composed of 14 symbols, and as the SCS is larger (wider), the symbol period (and the slot period) is shorter. Note that the number of symbols composing one slot does not necessarily have to be 14 symbols (for example, 28, 56 symbols). In addition, the number of slots per subframe may be different depending on the SCS. Further, the SCS may be wider than 240 kHz.

Note that the time direction (t) illustrated in FIG. 2 may be referred to as a time region, a time domain, a symbol period, a symbol time, or the like. In addition, the frequency direction may be referred to as a frequency region, a frequency domain, a resource block, a resource block group, a subcarrier, a band width part (BWP), a subchannel, a common frequency resource, or the like.

### <Multi-Carrier Enhancement>

In 3GPP, the multi-carrier enhancement for downlink signals and uplink signals is being discussed in the development of Rel-18.

For example, multi-cell PDSCH/PUSCH scheduling using a single DCI described in <Multi-Carrier Scheduling> below is discussed and some agreements are made.

Note that the multi-cell PDSCH/PUSCH scheduling may be referred to as multi-carrier PDSCH/PUSCH scheduling. In addition, the multi-cell PDSCH/PUSCH scheduling may be referred to as multi-cell scheduling or multi-carrier scheduling.

Further, the multi-cell PDSCH/PUSCH scheduling may also be referred to as single-DCI multi-cell PDSCH/PUSCH scheduling, single-DCI multi-carrier PDSCH/PUSCH scheduling, single-DCI multi-cell scheduling, or single-DCI multi-carrier scheduling.

In the following, the multi-cell PDSCH/PUSCH scheduling may be referred to as multi-carrier scheduling.

### <Multi-Carrier Scheduling>

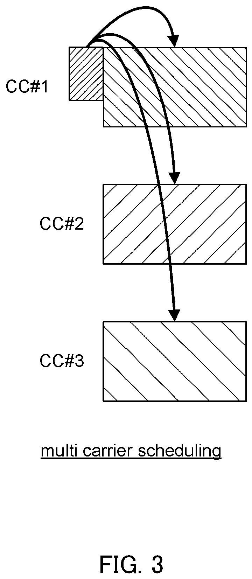

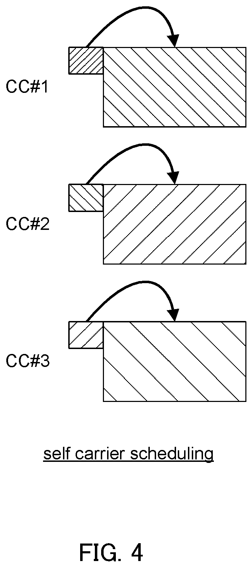

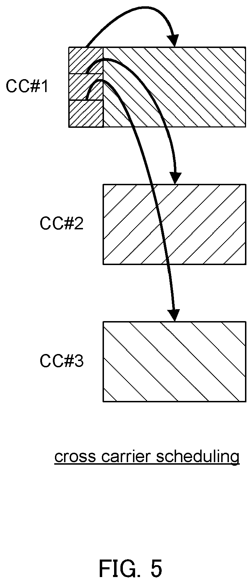

FIG. 3 is a diagram illustrating the multi-carrier scheduling. FIG. 4 is a diagram illustrating self-carrier scheduling. FIG. 5 is a diagram illustrating cross-carrier scheduling. CC#1 to CC#3 illustrated in FIGS. 3 to 5 indicate CCs. The CC may be referred to as a carrier or a cell. FIGS. 4 and 5 are provided for comparison with the multi-carrier scheduling in FIG. 3.

As illustrated in FIG. 3, in the multi-carrier scheduling, one DCI in one CC#1 schedules the PDSCHs/PUSCHs in a plurality of CC#1 to CC#3.

As illustrated in FIG. 4, in the self-carrier scheduling, one DCI in one CC#1 schedules the PDSCH/PUSCH in one CC#1 (the same CC as the CC of the DCI). One DCI in one CC#2 schedules the PDSCH/PUSCH in one CC#2. One DCI in one CC#3 schedules the PDSCH/PUSCH in one CC#3.

As illustrated in FIG. 5, in the cross-carrier scheduling, a plurality of DCIs in one CC#1 schedule the PDSCHs/PUSCHs in a plurality of CC#1 to CC#3.

The multi-carrier scheduling can be regarded as one DCI scheduling the PDSCHs/PUSCHs in a plurality of CCs. In contrast, the self-carrier scheduling and the cross-carrier scheduling can be regarded as a plurality of DCIs scheduling the PDSCHs/PUSCHs in a plurality of CCs.

Since one DCI schedules the PDSCHs/PUSCHs in a plurality of CCs in the multi-carrier scheduling, the load of DCI monitoring (PDCCH monitoring) in a terminal may be reduced as compared with the self-carrier scheduling and the cross-carrier scheduling. For example, in the multi-carrier scheduling, the number of PDCCH blind detections (BDs) in a terminal may be reduced.

In addition, in the multi-carrier scheduling, the total overhead of the DCI can be reduced as compared with the self-carrier scheduling and the cross-carrier scheduling. For example, in a scenario where there is no need to indicate different information to each of CC#1 to CC#3, common information can be indicated by one DCI (DCI field), thereby reducing the total overhead of the DCI.

### <DCI format 0_3/1_3>

The DCI format for the multi-carrier scheduling of the PUSCH is referred to as DCI format 0_3. The DCI format for the multi-carrier scheduling of the PDSCH is referred to as DCI format 1_3. DCI format 0_3/1_3 can schedule cells included in a set of cells to be scheduled at the same time. In the following, the Set of cells are sometimes referred to as SoCs.

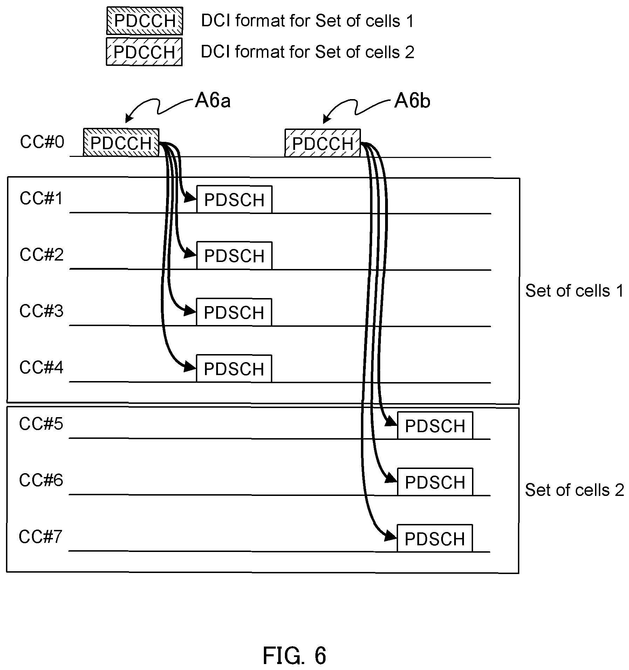

FIG. 6 is a diagram illustrating the scheduling in DCI format 1_3. One SoCs is composed of a maximum of four cells (CCs). One cell is included in one SoCs only. In the example of FIG. 6, Set of cells 1 includes the CCs#1/2/3/4, and Set of cells 2 includes the CCs#5/6/7. The information on a configuration of SoCs is indicated, for example, by higher layer signaling, such as RRC signaling.

DCI format 0_3/1_3 can schedule the combination of the cells included in the SoCs at the same time.

For example, the PDCCH (DCI format 1_3) indicated by arrow A6a in FIG. 6 can schedule the PDSCHs in the four CCs#1/2/3/4 of Set of cells 1 at the same time. For example, the PDCCH (DCI format 1_3) indicated by arrow A6b in FIG. 6 can schedule the PDSCHs in the three CCs#5/6/7 of Set of cells 2 at the same time.

For the PUCCH (DCI format 0_3), the PUSCHs can be scheduled at the same time in the same manner.

Note that, in FIG. 6, the PDCCHs are transmitted in a cell (#0) different from the cells (CC#1 to CC#7) in Set of cells 1 and Set of cells 2, but the present disclosure is not limited thereto. The PDCCHs may be transmitted in a cell in the SoCs. For example, in FIG. 6, the PDCCHs may be transmitted in the cell of CC#1. The same applies to the PUCCH.

### <Reference cell>

A cell referred to for counting a specific parameter, such as a DCI size, the number of PDCCH candidates (number of BDs), and the number of control channel elements (CCEs), is referred to as a reference cell. The reference cell is indicated to a terminal by a higher parameter (for example, a search space configuration) such as RRC signaling. In the multi-carrier scheduling, one reference cell is configured in each SoCs.

In addition, in the multi-carrier scheduling, the terminal counts a downlink assignment index (DAI) in the reference cell. Note that, in the self-carrier scheduling, the DAI is counted in a cell where the PDCCH is monitored, and in the cross-carrier scheduling, the DAI is counted in a scheduling destination cell.

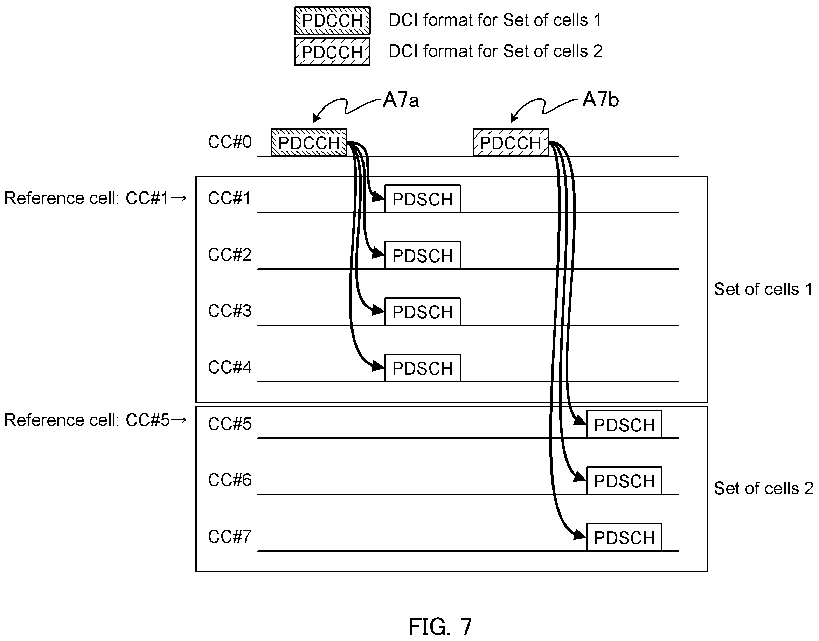

FIG. 7 is a diagram illustrating reference cells. In the example of FIG. 7, the reference cell of Set of cells 1 is configured to be CC#1 having the smallest index value in Set of cells 1. The reference cell of Set of cells 2 is configured to be CC#5 having the smallest index value in Set of cells 2.

### <HARQ-ACK CB>

In 3GPP, the function enhancement of the Hybrid Automatic Repeat request - Acknowledgement (HARQ-ACK) feedback by the HARQ-ACK Codebook (CB) is being studied in relation to the extension of the URLLC technology. In 3GPP, type-1, type-2 (hereinafter, sometimes abbreviated as "type-1/2") and type-3 HARQ-ACK CBs have been defined so far. Further, in 3GPP, an enhanced type-3 HARQ-ACK CB that is extended from the type-3 HARQ-ACK CB is defined in Rel-17. A terminal may be indicated by higher layer signaling, such as RRC, for example, as to which type of HARQ-ACK CB to apply. Each type of HARQ-ACK CB will be briefly described below.

### (type-1 HARQ-ACK CB)

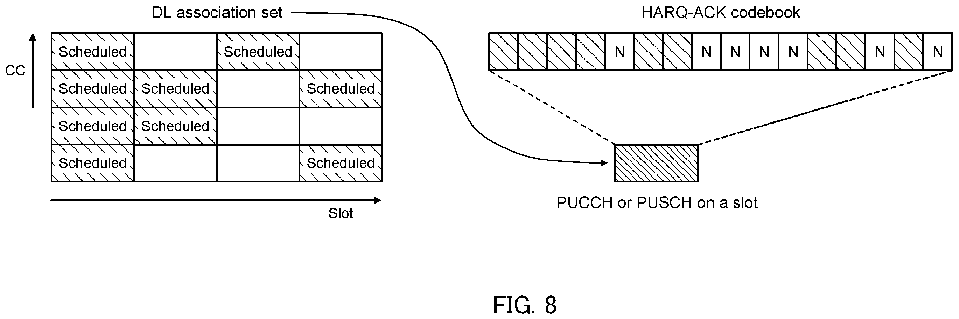

FIG. 8 is a diagram illustrating an overview of the type-1 HARQ-ACK CB. The "scheduled" illustrated in FIG. 8 indicates, for example, a slot scheduled by DCI. The CC indicates a component carrier.

In the type-1 HARQ-ACK CB, a terminal generates a HARQ-ACK bit for the PDSCH regardless of whether the scheduled slot (PDSCH) is present. For example, the terminal may configure the NACK in the PDSCH that is not scheduled, as illustrated in the "HARQ-ACK codebook" of FIG. 8.

### (type-2 HARQ-ACK CB)

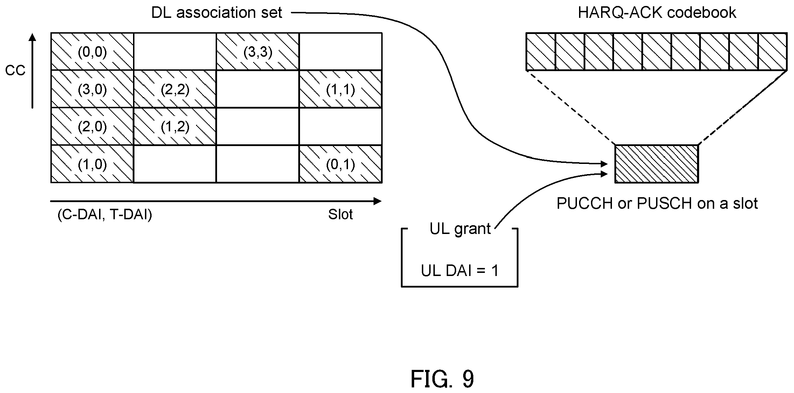

FIG. 9 is a diagram illustrating an overview of the type-2 HARQ-ACK CB. The (x, y) illustrated in FIG. 9 indicates, for example, a slot scheduled by DCI. In addition, in FIG. 9, x corresponds to a C-DAI value, and y corresponds to a T-DAI value. C-DAI is an abbreviation of Count - Downlink Assignment Index, and T-DAI is an abbreviation of Total - Downlink Assignment Index. The DAI indicates, for example, the assignment of the scheduled PDSCH to which the HARQ-ACK bit is bundled in the HARQ-ACK CB. The C-DAI and the T-DAI are counted for each DCI.

In the type-2 HARQ-ACK CB, the terminal generates the HARQ-ACK bit for the scheduled PDSCH. For example, the terminal may configure the HARQ-ACK for the scheduled PDSCH as illustrated in the "HARQ-ACK codebook" of FIG. 9.

Note that, the C-DAI is counted up from one. For example, in the case of a two-bit field, the C-DAI is repeated as in 1->2->3->0-> and so forth. The C-DAI is counted up per slot and per DCI reception occasion of each CC, and is counted up from the final value of the previous slot even though the slot changes. The T-DAI represents the final C-DAI value of each slot.

### (type-3 HARQ-ACK CB)

In 3GPP, in Rel-16, it was agreed to support the type-3 HARQ-ACK CB as a function of retransmitting the HARQ-ACK bits of all the HARQ process IDs.

The type-3 HARQ-ACK CB includes the HARQ-ACK information of all the configured HARQ processes in all the configured serving cells. The terminal is assumed to provide the HARQ-ACK information in response to the request of the type-3 HARQ-ACK CB N symbols after the last symbol of the PDCCH that provides the DCI format.

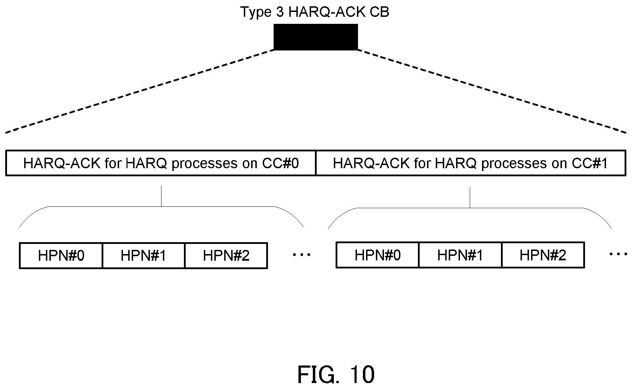

FIG. 10 is a diagram illustrating an overview of the type-3 HARQ-ACK CB. As illustrated in FIG. 10, in the type-3 HARQ-ACK CB, the HARQ-ACK bits are firstly arranged in ascending order of the HARQ process number (HPN) for each HARQ-ACK for HARQ processes on each CC. Then, the HARQ-ACKs for HARQ processes on CCs are arranged in ascending order of the CC number.

### (enhanced type-3 HARQ-ACK CB)

In 3GPP, it was agreed to support the enhanced type-3 HARQ-ACK CB in Rel-17. In addition, the following points have been agreed on the enhanced type-3 HARQ-ACK CB.

The size of the enhanced type-3 HARQ-ACK CB is smaller than the size of the type-3 HARQ-ACK CB. The size of the enhanced type-3 HARQ-ACK CB is defined by the configuration of RRC.

The enhanced type-3 HARQ-ACK CB is triggered by DCI format 1_1 and DCI format 1_2. In the enhanced type-3 HARQ-ACK CB, one or more small CBs are configured by the RRC. Each of the configured small CBs may include HARQ processes of a subset of the configured CCs or a subset of the configured HARQ processes (specific to the CC). The terminal can transmit a part of the subset by including it in the enhanced type-3 HARQ-ACK CB.

### <sub-codebook>

For the type-2 HARQ-ACK CB, two types of sub-codebooks, that is, a first sub-codebook and a second sub-codebook, are generated.

The first sub-codebook is used for HARQ-ACK feedback in, for example, the following cases.
- SPS PDSCH reception
- Any DCI format having associated HARQ-ACK information without scheduling PDSCH reception
- PDSCH reception scheduled by a DCI format scheduling one PDSCH
- PDSCH reception for TBG-based HARQ-ACK information on serving cells

The second sub-codebook is used for feedback of a HARQ-ACK bit for the PDSCH scheduled by a DCI format that schedules a plurality of PDSCHs.

### <partial scheduling>

In the Release 18 RAN1 #114-bis meeting, it was agreed to support the partial scheduling in the multi-cell PDSCH scheduling using DCI format 1_3.

In DCI format 1_3, a plurality of fields for a modulation and coding scheme (MCS), a redundancy version (RV), and a new data indicator (NDI) are provided, and the values can be individually indicated to each cell.

In the partial scheduling, for one cell in the SoCs, the DL assignment is not performed, the PDSCH scheduling by DCI format 1_3 is not performed, and each of the MCS, RV, and NDI fields of DCI format 1_3 is used for a purpose (function) other than the PDSCH scheduling. For the other cells, the PDSCH scheduling by DCI format 1_3 is performed, and each of the MCS, RV, and NDI fields of DCI format 1_3 is used for the PDSCH scheduling.

For example, in a case where the partial scheduling is performed in FIG. 5, in the CC#1, each of the MCS, RV, and NDI fields of DCI format 1_3 is used for a purpose (function) other than the PDSCH scheduling, and in the CC#2 and the CC#3, each of the MCS, RV, and/or NDI fields of DCI format 1_3 is used for the PDSCH scheduling.

In the following, in a case where the partial scheduling is performed, a cell in which the PDSCH scheduling by DCI format 1_3 is not performed and each of the MCS, RV, and/or NDI fields of DCI format 1_3 is used for a purpose (function) other than the PDSCH scheduling may be referred to as a "specific cell".

Note that a terminal can identify the specific cell by decoding DCI. Specifically, a cell for which the values of the field of frequency-domain resource allocation (FDRA) are invalid values (for example, all "0") and the specific DCI field is not configured in the DCI is interpreted as the specific cell.

In the agreement on the support for the partial scheduling, the "purpose (function) other than the scheduling of the PDSCH" includes at least the following.
- Scell dormancy indication case 2
- enhanced type-3 HARQ-ACK CB trigger
- HARQ-ACK retransmission slot offset

The "Scell dormancy indication case 2" is information indicating a cell to be put into dormancy among secondary-cells (Scells).

The "enhanced type-3 HARQ-ACK CB trigger" is information that triggers the transmission of the HARQ-ACK for some selected processes and cells in the enhanced type-3 HARQ-ACK CB that can indicate the HARQ-ACK of all the cells. The terminal reads the value of the MCS field of the specific cell and determines which HARQ-ACK to transmit for which HARQ-ACK process.

The "HARQ-ACK retransmission slot offset" is information indicating an offset with a PUCCH resource on which the HARQ-ACK is retransmitted, for a function of retransmitting the HARQ-ACK. The terminal reads the value of the MCS field of the specific cell and determines which HARQ-ACK of the PUCCH from how many slots ago to retransmit.

### <Analysis>

Since the support for the partial scheduling in the multi-cell PDSCH scheduling is agreed, the PDSCH scheduling by DCI format 1_3 is not performed in the specific cell. However, at present, the control on the terminal side in the partial scheduling, such as the HARQ-ACK feedback in the specific cell, has not been sufficiently considered.

### (Analysis 1)

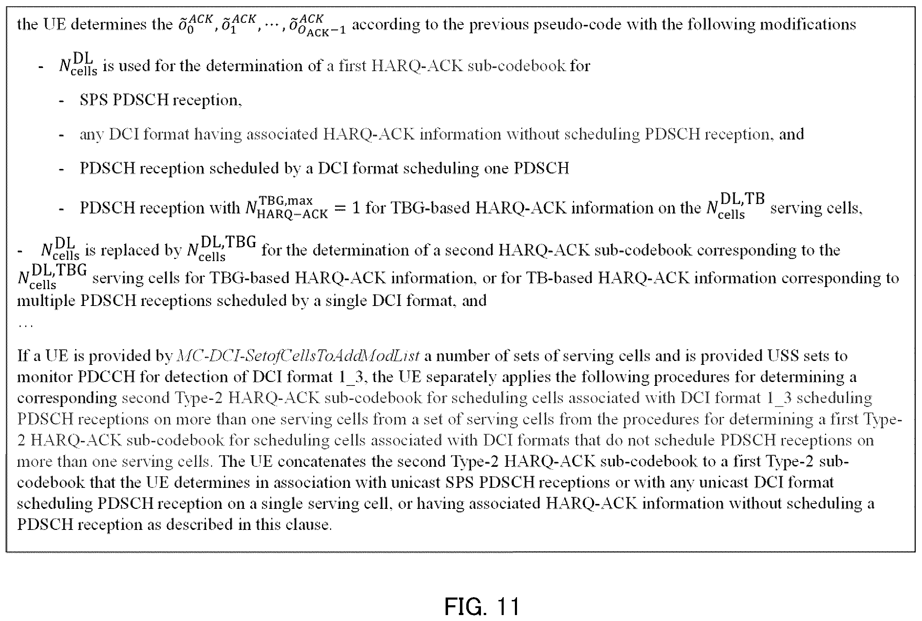

The HARQ-ACK bit for the existing DCI format in which the PDSCH scheduling is not performed is specified to be transmitted in the first sub-codebook. In contrast, the HARQ-ACK bit for the reception of the PDSCH scheduled by DCI format 1_3 is specified to be transmitted in the second sub-codebook. FIG. 11 is a diagram illustrating an example of a description of the current usage. Note that FIG. 11 is a description extracted from section 9.1.3.1 of 3GPP TS38.213 v18.0.0.

However, at present, nothing is specified on the sub-codebook that transmits the HARQ-ACK bit of the specific cell in which the PDSCH scheduling by DCI format 1_3 is not performed (hereinafter, sometimes abbreviated as "the HARQ-ACK bit of the specific cell").

Therefore, the base station and the terminal may have a discrepancy in the recognition of the sub-codebook for the HARQ-ACK bit of the specific cell, and there is a possibility that the appropriate communication cannot be performed.

### (Analysis 2)

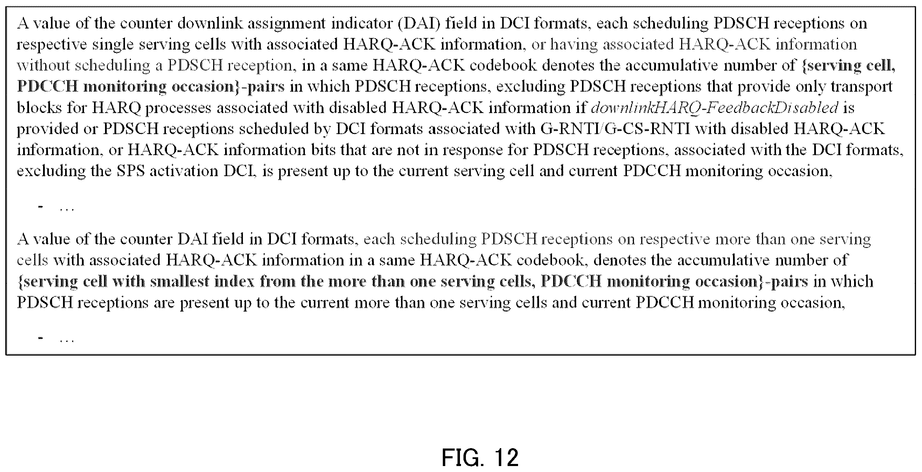

The C-DAI related to the HARQ-ACK for the existing DCI format in which the PDSCH scheduling is not performed is specified to be counted in a pair of the serving cell and the PDCCH monitoring occasion. In contrast, the C-DAI related to the HARQ-ACK for reception of the PDSCH scheduled by DCI format 1_3 is specified to be counted in a pair of the serving (serving cell of the PDSCH) cell having the smallest index among the plurality of serving cells and the PDCCH monitoring occasion. FIG. 12 is a diagram illustrating an example of a description of the current usage. Note that FIG. 12 is a description extracted from section 9.1.3.1 of 3GPP TS38.213 v18.0.0.

However, at present, nothing is specified on the method of determining the reference cell for performing the counting of the DAI and the like in a case where there is the specific cell in which the PDSCH scheduling by DCI format 1_3 is not performed due to the partial scheduling and each of the MCS, RV, and NDI fields of DCI format 1_3 is used for a purpose other than the PDSCH scheduling.

Therefore, the base station and the terminal may have a discrepancy in the recognition of the reference cell, and there is a possibility that the appropriate communication cannot be performed.

### (Analysis 3)

Although the support for the partial scheduling in the multi-cell PDSCH scheduling has been agreed, there are terminals that do not support the partial scheduling. At present, nothing is specified on the reporting of the capability of the terminal (UE capability) regarding the support for the partial scheduling.

Therefore, the base station and the terminal may have a discrepancy in the recognition of the capability of the terminal, and there is a possibility that the appropriate communication cannot be performed.

Based on the above analyses, following Proposals 1 to 3 are provided in the present embodiment.

### <Proposal 1>

Proposal 1 corresponds to above Analysis 1, and proposes the definition of the sub-codebook that transmits the HARQ-ACK bit of the specific cell in which the PDSCH scheduling by DCI format 1_3 is not performed and each of the MCS, RV, and/or NDI fields of DCI format 1_3 is used for a purpose other than the PDSCH scheduling or the HARQ-ACK bit of DCI format 1_3.

### <Option 1>

The sub-codebook that transmits the HARQ-ACK bit of the specific cell may be configured to be any of the following alternatives (hereinafter, referred to as "Alt") in a fixed or quasi-static manner.

### <Alt. 1>

The sub-codebook that transmits the HARQ-ACK bit of the specific cell or DCI format 1_3 may be a first sub-codebook.

In this case, the HARQ-ACK feedback control of a terminal in a cell in which the PDSCH scheduling by the DCI format is not performed can be commonized between the existing DCI format and DCI format 1_3.

### <Alt. 2>

The sub-codebook that transmits the HARQ-ACK bit of the specific cell or DCI format 1_3 may be a second sub-codebook.

In this case, the HARQ-ACK feedback control of the terminal in each cell in which the multi-cell PDSCH scheduling is performed by DCI format 1_3 can be commonized.

In addition, even in a case where DCI format 1_3 is dropped (in a case where the terminal fails to decode DCI format 1_3), the codebook can be generated such that there is no discrepancy in the size of the HARQ-ACK CB.

Note that the Alt in the above Option 1 that is actually applied to the communication may be defined by the specification, or may be dynamically determined based on the information included in any of a higher layer signal, MAC CE, and DCI received from the network (base station).

### <Operation of Terminal>

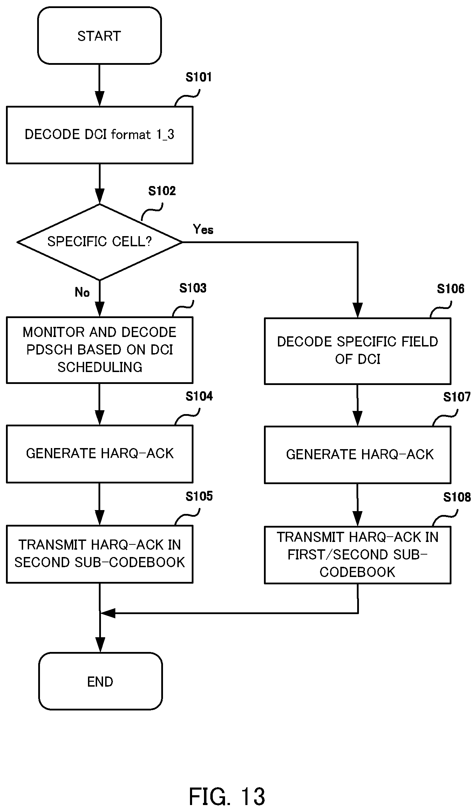

Next, the operation of the terminal in Option 1 of Proposal 1 will be described with reference to the flowchart of FIG. 13.

The terminal decodes DCI format 1_3 included in a received PDCCH (S101). The terminal determines whether each cell is a specific cell based on the value of the FDRA field or the like (S102).

For a cell other than the specific cell (S102: No), the terminal monitors the PDSCH based on the scheduling of DCI format 1_3, and decodes the PDSCH (S103).

The terminal generates a HARQ-ACK bit for the PDSCH reception (decoding result) (S104). Specifically, the terminal generates a HARQ-ACK bit having a value that means "ACK" (for example, "0") when succeeding in the PDSCH decoding, and generates a HARQ-ACK bit having a value that means "NACK" (for example, "1") when failing in the PDSCH decoding.

Next, the terminal maps the HARQ-ACK bit in the second sub-codebook and transmits the HARQ-ACK bit to the base station (S105).

In contrast, for the specific cell (S102: Yes), the terminal decodes a specific field of DCI format 1_3 (S106).

The terminal generates a HARQ-ACK bit for the reception (decoding result) of the specific field of DCI format 1_3 (S107).

Next, the terminal maps the HARQ-ACK bit in the first sub-codebook (in a case of Alt. 1) or the second sub-codebook (in a case of Alt. 2), and transmits the HARQ-ACK bit to the base station (S108).

Note that the mapping order of the HARQ-ACK bits in the sub-codebook is not particularly limited, and may be the serving cell index order of the cells corresponding to the HARQ-ACK bits, or may be another order.

### <Option 2>

The sub-codebook that transmits the HARQ-ACK bit of the specific cell or DCI format 1_3 may be configured to be any of the following Alts according to the number of cells in which the PDSCH is actually scheduled by DCI format 1_3.

### <Alt. 1>

When the number of cells in which the PDSCH is scheduled by DCI format 1_3 is "1", the sub-codebook that transmits the HARQ-ACK bit of the specific cell or DCI format 1_3 may be the first sub-codebook, and in other cases, the sub-codebook that transmits the HARQ-ACK bit of the specific cell may be the second sub-codebook.

### <Alt. 2>

When the number of cells in which the PDSCH is scheduled by DCI format 1_3 is "1", the sub-codebook that transmits the HARQ-ACK bit of the specific cell or DCI format 1_3 may be the second sub-codebook, and in other cases, the sub-codebook that transmits the HARQ-ACK bit of the specific cell may be the first sub-codebook.

Note that the Alt in above Option 2 that is actually applied to the communication may be defined by the specification, or may be dynamically determined based on the information included in any of a higher layer signal, MAC CE, and DCI received from the network (base station).

### <Option 3>

The sub-codebook that transmits the HARQ-ACK bit of the specific cell may be configured to be any of the following Alts according to whether it is a case where the PDSCH scheduling is not indicated to any of the cells included in the SoCs. Note that the presence or absence of the PDSCH scheduling for each cell included in the SoCs is indicated by the value of the FDRA field being a valid value or an invalid value, or is defined in advance and indicated by a cell number corresponding to the value of the scheduled cell indicator field in a table configured by a higher layer parameter. For example, in a case where the value of the FDRA field is an invalid value (for example, "0") for all the cells that can be scheduled, the PDSCH scheduling is not indicated to any of the cells included in the SoCs.

### <Alt. 1>

When the PDSCH scheduling is not indicated to any of the cells included in the SoCs, the sub-codebook that transmits the HARQ-ACK bit of the specific cell or DCI format 1_3 may be the first sub-codebook, and in other cases, the sub-codebook that transmits the HARQ-ACK bit of the specific cell or DCI format 1_3 may be the second sub-codebook.

### <Alt. 2>

When the PDSCH scheduling is not indicated to any of the cells included in the SoCs, the sub-codebook that transmits the HARQ-ACK bit of the specific cell or DCI format 1_3 may be the second sub-codebook, and in other cases, the sub-codebook that transmits the HARQ-ACK bit of the specific cell or DCI format 1_3 may be the first sub-codebook.

Note that the Alt in above Option 3 that is actually applied to the communication may be defined by the specification, or may be dynamically determined based on the information included in any of a higher layer signal, MAC CE, and DCI received from the network (base station).

### <Effect of Proposal 1>

According to the options and the alternatives of Proposal 1, the sub-codebook that transmits the HARQ-ACK bit of the specific cell or DCI format 1_3 can be clearly defined in the partial scheduling of the multi-cell PDSCH scheduling, resulting in no discrepancy in the recognition of the sub-codebook of the HARQ-ACK bit of the specific cell or DCI format 1_3 between the base station and the terminal, so that the appropriate communication can be performed.

### <Proposal 2>

Proposal 2 corresponds to above Analysis 2, and proposes a method of determining a reference cell in a case where the PDSCH scheduling by DCI format 1_3 is not performed and a specific cell in which each of the MCS, RV, and/or NDI fields of DCI format 1_3 is used for a purpose other than the PDSCH scheduling is present.

Note that the reference cell may be a cell referred to for counting the DAI.

In addition, the reference cell may be used for determining a PUCCH resource offset. There are a plurality of PDSCHs while only one offset is indicated by one DCI, and it is necessary to clarify from which PDSCH the number of slots should be counted, and thus the terminal counts the offset from the PDSCH scheduled for the reference cell to determine the PUCCH resource offset.

Further, the reference cell may be a cell of the last DCI format for the PUCCH resource determination. When the HARQ-ACK bits for respective PDSCHs scheduled by a plurality of DCIs are transmitted by one HARK-ACK CB, it is necessary to clarify which PUCCH Resource Indicator (PRI) indicated by which DCI format is used, and thus the terminal determines the PUCCH resource based on the PRI indicated by the last DCI format of the reference cell.

### <Option 1>

When the PDSCH scheduling is indicated to any of the cells included in the SoCs in which the specific cell is present (in a case where the value of the FDRA field for at least one cell is a valid value), the terminal may determine the reference cell by any of the following Alts.

### <Alt. 1>

A PDCCH cell (scheduling cell) is regarded as the reference cell. Note that, in the example of FIG. 6, the CC#0 that is a PDCCH cell (scheduling cell) is regarded as the reference cell.

### <Alt. 2>

A cell (specific cell) in which each of the MCS, RV, and/or NDI fields of DCI format 1_3 is used for a purpose other than the PDSCH scheduling is regarded as the reference cell.

### <Alt. 3>

A cell for counting the DCI size, the number of PDCCH candidates (number of BDs), and/or the number of CCEs (a cell for which an SS set for monitoring DCI format 1_3 is configured) is regarded as the reference cell.

### <Alt. 4a>

A cell having the smallest serving cell index among the cells to which the scheduling is indicated (cells having a valid value in the FDRA field) is regarded as the reference cell.

### <Alt. 4b>

A cell having the largest serving cell index among the cells to which the scheduling is indicated (cells having a valid value in the FDRA field) is regarded as the reference cell.

### <Alt. 5a>

A cell having the smallest serving cell index among the cells included in the SoCs is regarded as the reference cell. Note that, in the example of FIG. 6, the CC#1 is regarded as the reference cell of Set of Cells 1, and the CC#5 is regarded as the reference cell of Set of Cells 1.

### <Alt. 5b>

A cell having the largest serving cell index among the cells included in the SoCs is regarded as the reference cell. Note that, in the example of FIG. 6, the CC#4 is regarded as the reference cell of Set of Cells 1, and the CC#7 is regarded as the reference cell of Set of Cells 1.

### <Alt. 6a>

A cell having the smallest serving cell index among the cells to which the scheduling is indicated and the cells (specific cells) in which each of the MCS, RV, and NDI fields of DCI format 1_3 is used for a purpose other than the PDSCH scheduling is regarded as the reference cell.

### <Alt. 6b>

A cell having the largest serving cell index among the cells to which the scheduling is indicated and the cells (specific cells) in which each of the MCS, RV, and NDI fields of DCI format 1_3 is used for a purpose other than the PDSCH scheduling is regarded as the reference cell.

Note that the Alt in above Option 1 that is actually applied to the communication may be defined by the specification, or may be dynamically determined based on the information included in any of a higher layer signal, MAC CE, and DCI received from the network (base station).

### <Option 2>

In a case where the PDSCH scheduling is not indicated to any of the cells included in the SoCs in which the specific cell is present (in a case where the value of the FDRA field is an invalid value for all the cells that can be scheduled), the reference cell may be determined by any of the following Alts.

### <Alt. 1>

A PDCCH cell (scheduling cell) is regarded as the reference cell.

### <Alt. 2>

A cell (specific cell) in which each of the MCS, RV, and/or NDI fields of DCI format 1_3 is used for a purpose other than the PDSCH scheduling is regarded as the reference cell.

### <Alt. 3>

A cell for counting the DCI size, the number of PDCCH candidates (number of BDs), and/or the number of CCEs (a cell for which an SS set for monitoring DCI format 1_3 is configured) is regarded as the reference cell.

Note that the Alt in above Option 2 that is actually applied to the communication may be defined by the specification, or may be dynamically determined based on the information included in any of a higher layer signal, MAC CE, and DCI received from the network (base station).

### <Variation 1>

In the above Option 1 or 2, a cell to be determined as the reference cell may be varied depending on whether a PDCCH cell (scheduling cell) is included in the SoCs. For example, in Option 1, when a PDCCH cell is included in the SoCs, (Alt. 1) the PDCCH cell may be regarded as the reference cell, and when a PDCCH cell is not included in the SoCs, (Alt. 2) the specific cell may be regarded as the reference cell.

### <Variation 2>

In the above Option 1 and Option 2, the same cell may be regarded as a cell to be determined as the reference cell. This reduces the control load for determining the reference cell. For example, a PDCCH cell may be regarded as the reference cell regardless of whether the PDSCH scheduling is indicated to any of the cells included in the SoCs in which a specific cell is present (Alt. 1 of Option 1 and Alt. 1 of Option 2).

### <Effect of Proposal 2>

According to the options and the alternatives of Proposal 2, the reference cell can be clearly defined in the partial scheduling of the multi-cell PDSCH scheduling, resulting in no discrepancy in the recognition of the reference cell between the base station and the terminal, so that the appropriate communication can be performed.

In addition, the terminal can count the DAI in the reference cell. The terminal also can determine the PUCCH resource offset in the reference cell. The terminal also can determine the PUCCH resource based on the PRI indicated in the last DCI format in the reference cell.

### <Proposal 3>

Proposal 3 corresponds to above Analysis 3, and proposes the reporting of the capability of the terminal (UE capability) related to the support for the partial scheduling in the multi-cell PDSCH scheduling using DCI format 1_3.

The terminal may report terminal capability information (UE capability) that specifies information on the capability of the terminal related to the partial scheduling to the base station by signaling in an initial stage of the communication with the base station.

For example, information indicating whether the terminal supports the "Scell dormancy indication", information indicating whether the terminal supports the "enhanced type-3 HARQ-ACK CB trigger", information indicating whether the terminal supports the "indication of the value "l" of the slot offset in triggering HARQ-ACK retransmission", or the like may be defined as the UE capability. Note that the information indicating whether the "enhanced type-3 HARQ-ACK codebook trigger" is supported may be defined as a component of the FG49-5a/5b. Further, the value "l" of the slot offset may be defined by the specification or may be set by a higher layer parameter.

In addition, for example, information indicating whether to allow each of the MCS, RV, and NDI fields of DCI format 1_3 to be used for a purpose other than the PDSCH scheduling for a P(S)Cell, information indicating whether to allow each of the MCS, RV, and NDI fields of DCI format 1_3 to be used for a purpose other than the PDSCH scheduling for an SCell, or the like may be defined as the UE capability.

The base station receives the UE capability from the terminal in an initial stage of the communication with the terminal. The base station performs communication in accordance with the capability of each terminal. For example, the base station does not use each of the MCS, RV, and NDI fields of DCI format 1_3 to be transmitted to the terminal that does not have the capability for the partial scheduling for a purpose other than the PDSCH scheduling. In addition, the terminal that does not have the capability for the partial scheduling does not assume that each of the MCS, RV, and NDI fields of DCI format 1_3 is used for a purpose other than the PDSCH scheduling.

Note that the reporting granularity of the UE capability of the terminal may be for each carrier type (FR1/FR2-1/FR2-2, licensed/unlicensed, Time Division Duplex (TDD)/Frequency Division Duplex (FDD)), for each band, for each terminal, for each band combination (BC), for each feature set (FS), or for each Feature Set Per Component-carrier (FSPC).

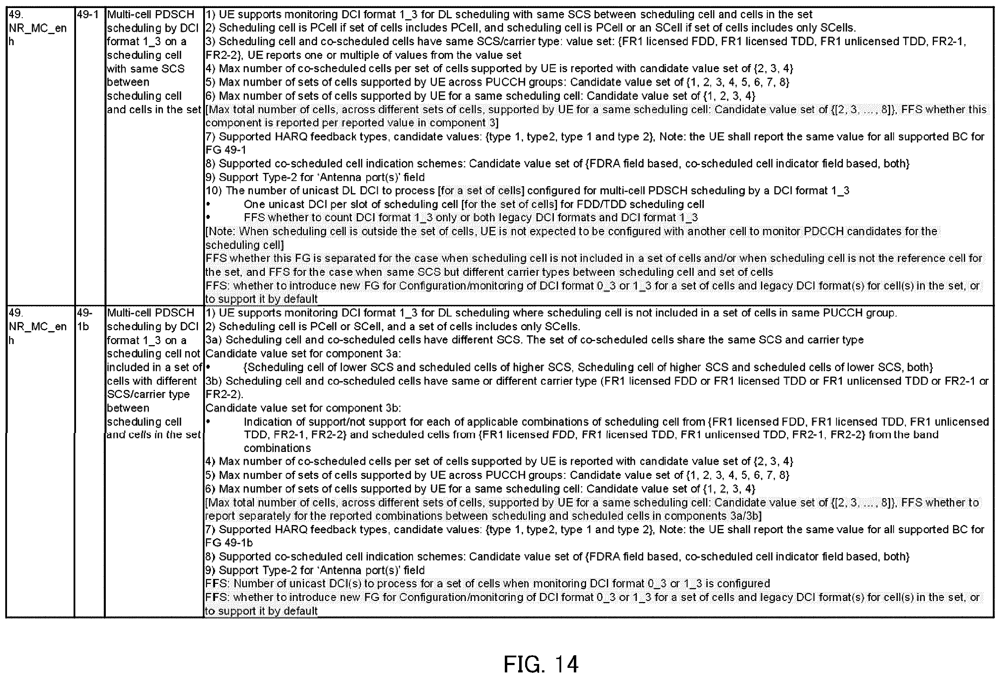

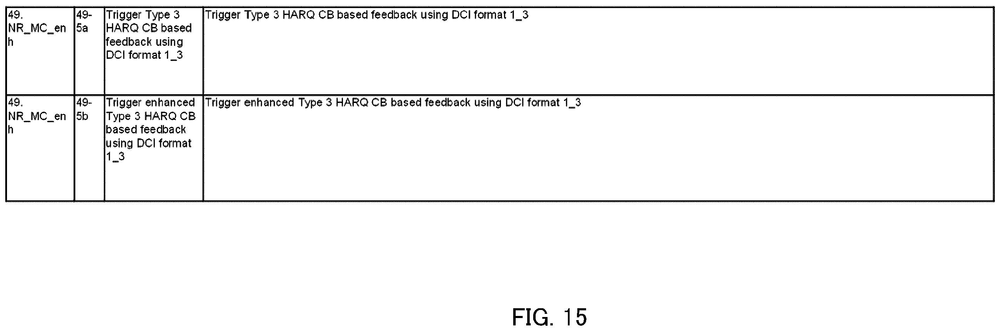

The prerequisite FG may be at least any one of the FG49-1/1b/5a/5b. The FG49-1/1b illustrated in FIG. 14 defines a function related to the support for the DCI format of the multi-cell PDSCH scheduling. The FG49-5a/5b illustrated in FIG. 15 defines a function related to the support for the PDSCH scheduled by DCI format 1_3 for the enhanced type-3 HARQ-ACK CB and the type-3 HARQ-ACK CB.

In addition, the UE capability signaling (FG49-x) for performing the Scell dormancy indication by DCI format 1_3 may be a prerequisite, or the UE capability signaling (FG49-x) for performing the HARQ-ACK retransmission by DCI format 1_3 may be a prerequisite.

### <Effect of Proposal 3>

According to Proposal 3, the UE capability related to the partial scheduling of the multi-cell PDSCH scheduling can be clearly defined, resulting in no discrepancy in the recognition of the capability of the terminal between the base station and the terminal, so that the appropriate communication can be performed.

### <Configuration of Base Station>

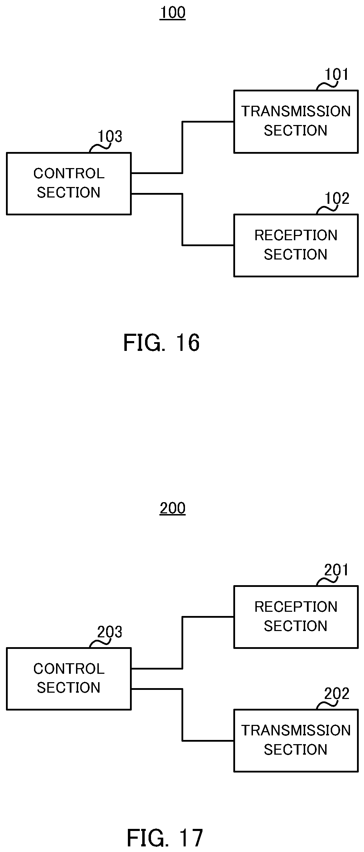

FIG. 16 is a block diagram illustrating an example of the configuration of base station 100 according to the embodiment. Base station 100 includes, for example, transmission section 101, reception section 102, and control section 103. Base station 100 communicates with terminal 200 (see FIG. 17) by radio. Base station 100 may be an intermediate node, a support node, or a terminal (a SL terminal that communicates with terminal 200).

Transmission section 101 transmits a downlink (DL) signal to terminal 200. For example, transmission section 101 transmits the DL signal under the control of control section 103.

The DL signal may include, for example, a data signal of a downlink and control information (for example, Downlink Control Information (DCI)). The DL signal may include information (for example, a UL grant) indicating scheduling related to signal transmission of terminal 200. In addition, the DL signal may include control information of a higher layer (for example, control information of Radio Resource Control (RRC)). Furthermore, the DL signal may include a reference signal.

Channels used for signal transmission include, for example, data channels and control channels. For example, the data channels may include Physical Downlink Shared Channel (PDSCH) and the control channels may include Physical Downlink Control Channel (PDCCH). For example, base station 100 transmits control information to terminal 200 by using PDCCH and transmits a downlink data signal by using PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulating a downlink data signal and is transmitted by using PDSCH.

Reception section 102 receives an uplink (UL) signal transmitted from terminal 200. For example, reception section 102 receives the UL signal under the control of control section 103.

Control section 103 controls communication operations of base station 100 including transmission processing in transmission section 101 and reception processing in reception section 102.

For example, control section 103 acquires data and information such as control information from a higher layer, and outputs the data and information to transmission section 101. Further, control section 103 outputs the data, control information and/or the like received from reception section 102 to a higher layer.

For example, control section 103 allocates resources (or channels) used for DL signal transmission and reception and/or resources used for UL signal transmission and reception, based on a signal (e.g., data, control information and/or the like) received from terminal 200 and/or based on data, control information and/or the like acquired from a higher layer. Information on the allocated resources may be included in control information to be transmitted to terminal 200.

Control section 103 configures a PUCCH resource as an example of the allocation of resources used for UL signal transmission and reception. Information on PUCCH configuration such as a PUCCH cell timing pattern (PUCCH configuration information) may be indicated to terminal 200 by RRC.

### <Configuration of Terminal>

FIG. 17 is a block diagram illustrating an example of a configuration of terminal 200 according to an embodiment. Terminal 200 includes, for example, reception section 201, transmission section 202, and control section 203. Terminal 200 communicates with base station 10 by radio, for example.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, the UL signal may include information on processing capabilities of terminal 200 (e.g., UE capability). Further, the UL signal may include a reference signal.

Channels used for UL signal transmission include, for example, data channels and control channels. For example, the data channels include Physical Uplink Shared Channel (PUSCH) and the control channels include Physical Uplink Control Channel (PUCCH). For example, terminal 200 receives control information from base station 10 by using PUCCH and transmits an uplink data signal by using PUSCH.

The reference signal included in the UL signal may include, for example, at least one of a DMRS, a PTRS, a CSI-RS, an SRS, and a PRS. For example, the reference signal such as the DMRS and the PTRS is used for demodulating an uplink data signal and is transmitted by using an uplink channel (e.g., PUSCH).

Control section 203 controls communication operations of terminal 200 including reception processing in reception section 201 and transmission processing in transmission section 202.

For example, control section 203 acquires data and information such as control information from a higher layer, and outputs the data and control information to transmission section 202. Further, control section 203 outputs, for example, the data, control information and/or the like received from reception section 201 to a higher layer.

For example, control section 203 controls transmission of information to be fed back to base station 10. The information to be fed back to base station 10 may include, for example, a HARQ-ACK, Channel State Information (CSI), and a Scheduling Request (SR). The information to be fed back to base station 10 may be included in UCI. The UCI is transmitted in a PUCCH resource.

Control section 203 configures a PUCCH resource based on the configuration information received from base station 10 (e.g., configuration information such as PUCCH cell timing pattern indicated by RRC and/or DCI). Control section 203 determines a PUCCH resource used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for DL signal transmission and the channels used for UL signal transmission may include a Random Access Channel (RACH) and a Physical Broadcast Channel (PBCH). The RACH may be used, for example, to transmit Downlink Control Information (DCI) including a Random Access Radio Network Temporary Identifier (RA-RNTI).

### <Summary>

The present disclosure has been described above. Note that the division of the items in the above description is not essential to the present disclosure, and matters described in two or more items may be used in combination as necessary, and matters described in one item may be applied to matters described in another item (as long as they do not contradict each other).

The present disclosure has been described above. Note that the division of the items in the above description is not essential to the present disclosure, and matters described in two or more items may be used in combination as necessary, and matters described in one item may be applied to matters described in another item (as long as they do not contradict each other). The above proposals and options may be combined.

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

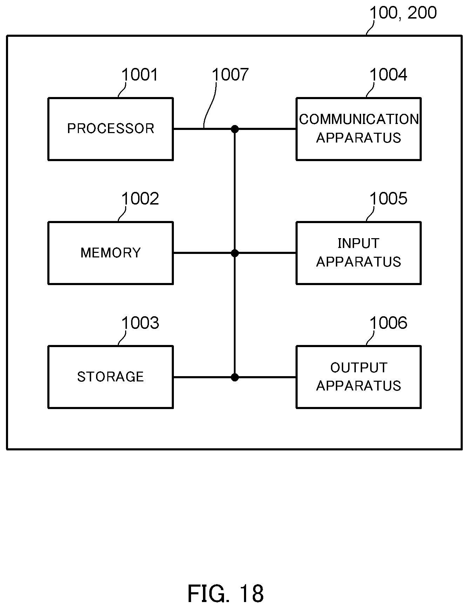

For example, a base station, a terminal, and so on according to one embodiment of the present disclosure may function as a computer that executes the processes of the radio communication method of the present disclosure. FIG. 18 is a diagram to show an example of a hardware structure of a base station and a terminal according to an embodiment. Physically, the above-described base station 100 and terminal 200 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100 and terminal 200 may be configured to include one or more of apparatuses illustrated in the drawings, or may be configured not to include part of apparatuses.

Each function of base station 100 and terminals 200 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100 and terminals 200 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminal 200 may have the functions of base station 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 100 may have the functions of terminal 200 described above.

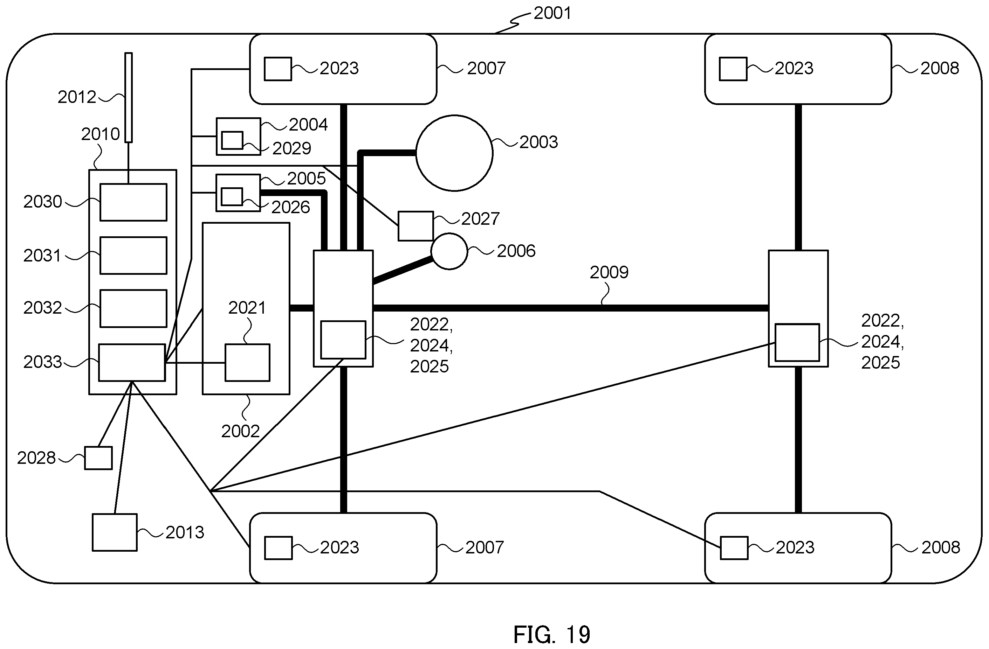

FIG. 19 illustrates an example of a configuration of vehicle 2001. As illustrated in FIG. 19, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 29 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

### <Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

100 Base station
200 Device
101, 202 Transmission section
102, 201 Reception section
103, 203 Control section

## Claims

1. A terminal comprising:
a control section that generates an uplink control signal including a UE capability specifying a capability of the terminal related to partial scheduling in multi-cell scheduling; and
a transmission section that transmits the uplink control signal.

2. The terminal according to claim 1, wherein the UE capability includes information indicating whether the terminal supports an "Scell dormancy indication".

3. The terminal according to claim 1, wherein the UE capability includes information indicating whether the terminal supports an "enhanced type-3 HARQ-ACK trigger".

4. The terminal according to claim 1, wherein the UE capability includes information indicating whether the terminal supports an "indication of a value of a slot offset in triggering HARQ-ACK retransmission".

5. A radio communication method comprising:
generating, by a terminal, an uplink control signal including a UE capability specifying a capability of the terminal related to partial scheduling in multi-cell scheduling; and
transmitting, by the terminal, the uplink control signal.
